# NOUVEAU FASCICULE DE BREVET EUROPEEN

(11) **EP 2 640 632 B3**
(45) Date de publication du présent fascicule: **02.03.2016**
(45) Mention de la délivrance du brevet: 02.09.2015
(21) Numéro de dépôt: 11796742.2
(22) Date de dépôt: 14.11.2011
(51) Int. Cl.: B63H 15/00, F03D 9/00, B63B 21/50, B63B 22/02, B63B 35/44, B63H 25/00, B63H 25/42, F03D 11/04

(54) **INSTALLATION ET PROCÉDÉ D'EXPLOITATION D'ÉNERGIE ÉOLIENNE**
ANLAGE UND VERFAHREN ZUR NUTZUNG VON WINDKRAFT
INSTALLATION AND METHOD FOR EXPLOITING WIND ENERGY

(30) Priorité: 17.11.2010 FR 1059434
(43) Date de publication de la demande: 25.09.2013
(73) Titulaire: Ideol, 38410 Saint-martin-d'uriage (FR)
(72) Inventeur: DUPIN DE LA GUERIVIERE, Paul, F-13790 Rousset (FR)
(74) Mandataire: Calvo de Nó, Rodrigo
(86) Numéro de dépôt international: PCT/FR2011/052633
(87) Numéro de publication internationale: WO 2012/066223

(56) Documents cités:
- EP-A2- 2 267 297
- WO-A1-2007/009464
- US-A1- 2003 168 864
- US-A1- 2010 138 201

## Description

La présente invention concerne une plateforme flottante et un procédé pour l'exploitation de l'énergie éolienne, en particulier en mer au large.

Dans les dernières années, l'exploitation de l'énergie éolienne a connu un intérêt croissant, tant pour diminuer la dépendance des sources d'énergie fossile, que pour éviter les émissions de gaz d'effet de serre. En particulier, l'installation de turbines éoliennes au large permet la construction et l'exploitation de parcs éoliens de grande dimension dans des zones de vents de vitesse moyenne élevée, tout en limitant l'impact visuel et sonore qui empêche souvent l'érection de turbines éoliennes sur terre ferme. Bien que des turbines éoliennes aient été érigées au large directement sur des fondations implantées sur le fond marin, ce procédé est normalement limité à des profondeurs relativement faibles, limitant donc le nombre de sites potentiels dans lequel il peut être utilisé. Des installations flottantes d'exploitation d'énergie éolienne ont donc été proposées, qui sont maintenues en position par rapport au fond marin à l'aide de lignes d'ancrage, incluant par exemple, des câbles, chaînes, cordages, etc., plutôt que par des structures rigides.

Par exemple, dans la demande internationale de brevet WO 2009/048830, une plateforme flottante ancrée à au moins un point d'ancrage a été proposée avec une turbine éolienne et une ligne d'ancrage. Dans la demande internationale de brevet WO 03/004869, une plateforme flottante ancrée à au moins un point d'ancrage a été proposée avec au moins une turbine éolienne, et un dispositif de déplacement de la turbine éolienne. On entend par « déplacement » un changement de position de la turbine éolienne, différent d'un simple changement d'orientation tel qu'une rotation autour de son axe vertical pour s'orienter par rapport au vent, telle qu'elle est connue de longue date. Avec de telles plateformes flottantes, il devient ainsi possible d'installer des turbines éoliennes même au large sur des fonds profonds et d'assurer leur maintien en position. La demande de brevet US 2003/168864 A1 décrit un autre exemple de parc éolien suivant l'état de la technique et divulgue le préambule de la revendication 1.

Un inconvénient des turbines éoliennes tant sur terre qu'au large, en particulier lorsqu'elles sont installées non pas de manière isolée mais dans des parcs éoliens, c'est-à-dire, des ensembles de plusieurs turbines, est que le sillage aérodynamique de chaque turbine peut affecter négativement la production d'énergie des turbines voisines. Pour remédier au moins partiellement à cet inconvénient, les turbines éoliennes dans un parc éolien sont normalement positionnées de manière à minimiser les effets de sillage entre turbines. Toutefois, tout particulièrement sur des sites dont les directions des vents sont dispersées, ce positionnement ne permettra normalement pas une optimisation parfaite, sauf à augmenter considérablement l'espacement entre les turbines, et des pertes de production d'énergie dues aux effets de sillage subsisteront.

L'invention vise à proposer un parc éolien comportant une pluralité de plateformes flottantes dont chacune est ancrée à au moins un point d'ancrage et comporte au moins une turbine éolienne et un dispositif de déplacement actif de la turbine éolienne qui permette de maximiser la production d'énergie.

Ce but est atteint grâce au fait que le dispositif de déplacement de la turbine éolienne d'une plateforme flottante d'un parc éolien suivant au moins un mode de réalisation de l'invention est un dispositif de déplacement actif, c'est-à-dire, un dispositif de déplacement comportant un ensemble d'actionneurs et/ou propulseurs pouvant activement repositionner la turbine éolienne, configuré pour déplacer la turbine éolienne en fonction d'un ensemble de paramètres, dont la direction et la vitesse du vent, afin de minimiser les effets de sillage aérodynamique. Dans le présent contexte, on ne doit pas entendre « ensemble de paramètres » comme représentant nécessairement une pluralité de paramètres.

Grâce à une telle configuration du dispositif de déplacement de la turbine éolienne, il est possible de repositionner les turbines d'un parc éolien de manière à minimiser les effets de sillage pour chacune des directions et vitesses du vent, et ainsi maximiser la production d'énergie du parc.

En particulier, ledit dispositif de déplacement actif peut comporter au moins un actionneur apte à tirer sur au moins une ligne d'ancrage pour déplacer la turbine éolienne. La turbine éolienne peut ainsi être déplacée facilement et avec précision en fonction d'un ensemble de paramètres, dont la direction et la vitesse du vent. Afin d'en faciliter l'accès et la maintenance, la ligne d'ancrage couplée à l'actionneur peut comporter deux extrémités, connectées chacune à un point d'ancrage différent. Ainsi, la traction exercée par l'actionneur permettra de déplacer la turbine éolienne sur une trajectoire entre ces deux points d'ancrage tout en réduisant significativement les efforts exercés par les lignes d'ancrage sur ledit dispositif. L'actionneur ne doit pas nécessairement être embarqué à bord de la plateforme flottante, mais peut se trouver à bord d'un navire de maintenance accostant la plateforme flottante pour des déplacements saisonniers en particulier quand la plateforme flottante est située dans une zone où les variations saisonnières de vent sont très marqués, tel que par exemple les zones de mousson ou d'alizés. Un dispositif de déplacement actif peut aussi comporter au moins un propulseur hydrodynamique apte à propulser le déplacement de la turbine éolienne, de telle manière que le déplacement soit effectué par une poussée de ce propulseur hydrodynamique sur au moins une partie de la plateforme flottante.

Avantageusement, un tel dispositif de déplacement actif peut être connecté à une unité de commande, apte à être reliée à un ensemble de capteurs de différents paramètres, notamment la direction et la vitesse du vent, la direction et/ou la vitesse du courant, la houle, et/ou la position de plates-formes adjacentes, pour commander un déplacement de la turbine éolienne en fonction de signaux émis par ledit ensemble de capteurs. Le repositionnement de la turbine éolienne peut ainsi être automatisé.

La plateforme flottante peut, par exemple, comporter une tourelle d'amarrage, en particulier une tourelle d'amarrage ancrée à une pluralité de points d'ancrage, et un flotteur, soutenant ladite turbine éolienne et connecté à ladite tourelle à travers une articulation avec au moins un axe de rotation vertical. Cette configuration peut permettre un déplacement passif de la turbine éolienne par effet de girouette, les efforts aérodynamiques et hydrodynamiques exercés par le vent et les courants sur la turbine éolienne et le flotteur faisant tourner le flotteur, avec la turbine éolienne, autour dudit axe vertical. Toutefois, afin de pouvoir activement commander le déplacement de la turbine éolienne, ledit dispositif de déplacement peut aussi être un dispositif de déplacement actif comportant en particulier un propulseur couplé audit flotteur et/ou au moins un actionneur apte à tirer sur une ligne d'ancrage du flotteur pour déplacer le bras flottant autour de l'axe de rotation vertical.

Avantageusement, ledit dispositif de déplacement est apte à déplacer la turbine éolienne dans un plan horizontal en fonction d'un ensemble de paramètres dont la direction du vent. Toutefois, de manière alternative ou complémentaire à un tel déplacement horizontal, ledit dispositif de déplacement peut aussi être apte à déplacer la turbine éolienne verticalement en fonction d'un ensemble de paramètres dont la direction du vent. Pour cela, le dispositif de déplacement peut comporter, par exemple, un dispositif de ballastage variable de la plateforme flottante ou un mât mobile de la turbine éolienne.

L'invention concerne ainsi un procédé d'exploitation d'énergie éolienne par un ensemble de plateformes flottantes ancrées chacune par au moins une ligne d'ancrage et comportant chacune au moins une turbine éolienne, dans lequel au moins une turbine éolienne dudit ensemble de plateformes flottantes est déplacée en fonction d'un ensemble de paramètres, dont la direction et la vitesse du vent, afin de minimiser les effets de sillage aérodynamique et maximiser la production d'énergie du parc éolien. Ce déplacement peut être commandé en fonction de la direction du vent instantanée ou prévue à courte échéance, mais aussi de la direction du vent dominante sur de longues périodes. Par exemple, les turbines éoliennes peuvent être déplacées en fonction de la saison, dans des sites où les vents sont saisonniers.

Le principal avantage du procédé est celui de permettre la minimisation des effets de sillage dans des parcs éoliens comportant plusieurs plateformes.

Avantageusement, la turbine éolienne est déplacée, en fonction d'un ensemble de paramètres incluant la direction et la vitesse du vent, vers une position prédéfinie pour maximiser la production d'énergie du parc éolien suivant un modèle simulant les sillages aérodynamiques de l'ensemble des turbines pour cet ensemble de paramètres. Ces modèles aérodynamiques peuvent par ailleurs être optimisés et réajustés empiriquement au cours de l'exploitation de la turbine éolienne à l'aide de données et mesures collectées.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1A est une vue de côté d'une plateforme flottante suivant un premier exemple comparatif ;
- la figure 1B est une vue de dessus de l'installation de la figure 1A ;
- la figure 2A est une vue de côté d'une plateforme flottante suivant un premier mode de réalisation de la présente invention ;
- la figure 2B est une vue de dessus de la plateforme flottante de la figure 2A ;
- la figure 3A est une vue de côté d'une plateforme flottante suivant un deuxième mode de réalisation de la présente invention ;
- la figure 3B est une vue de dessus de l'installation de la figure 3A ;
- la figure 4A est une vue de côté d'une plateforme flottante suivant un troisième mode de réalisation de la présente invention ;
- la figure 4B est une vue de dessus de l'installation de la figure 4A ;
- la figure 5A est une vue de côté d'une plateforme flottante suivant un quatrième mode de réalisation de la présente invention ;
- la figure 5B est une vue de dessus de la plateforme flottante de la figure 5A ;
- la figure 6 est une vue de détail du dispositif de déplacement de la plateforme flottante des figures 5A et 5B ;
- la figure 7 est un schéma d'un système de commande d'une quelconque des plateformes du premier au quatrième mode de réalisation ;
- les figures 8A, 8B, et 8C illustrent schématiquement des configurations d'un parc éolien suivant un mode de réalisation de l'invention avec des orientations du vent différentes;
- la figure 9 illustre schématiquement un procédé de conception d'un parc éolien ;
- la figure 10 illustre schématiquement un premier procédé de commande du positionnement des turbines d'un parc éolien conçu suivant le procédé de la figure 9 ; et
- la figure 11 illustre schématiquement un deuxième procédé de commande du positionnement des turbines d'un parc éolien conçu suivant le procédé de la figure 9.

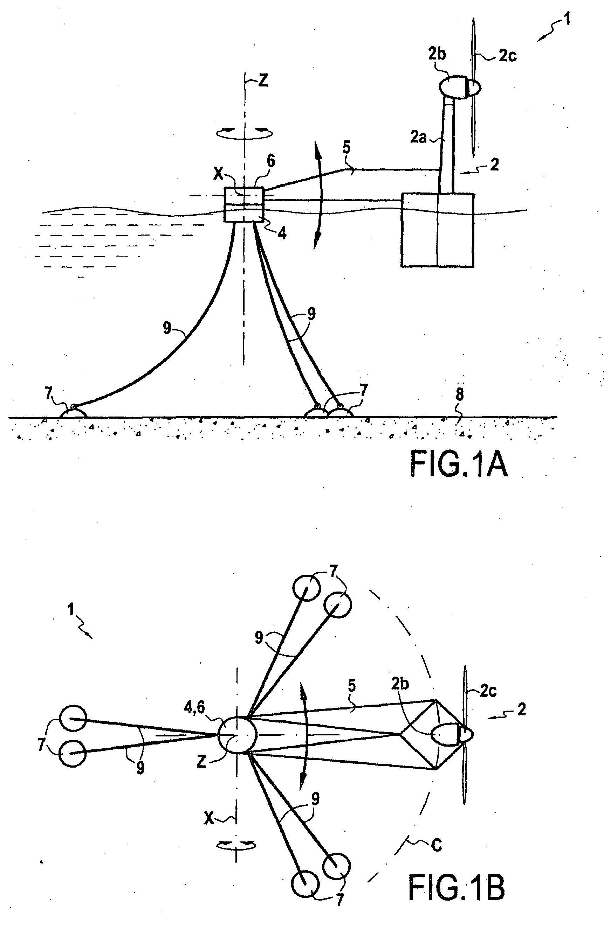

Un premier exemple comparatif d'une plateforme flottante 1 d'exploitation d'énergie éolienne comportant une turbine éolienne 2 pouvant se déplacer dans un plan horizontal en fonction d'un ensemble de paramètres, dont la direction du vent, est illustré sur les figures 1A et 1B. Cette turbine éolienne 2 comporte un mât 2a, une nacelle 2b contenant une génératrice électrique et orientable autour d'un axe vertical par rapport au mât 2a, et un rotor multipales 2c à axe de rotation sensiblement horizontal. La plateforme flottante 1 comprend aussi une tourelle d'amarrage 4, et un flotteur 5 connecté audit corps d'amarrage 4 à travers une articulation 6. Ce corps 4 est ancré à une pluralité de points 7 d'ancrage au fond marin 8 par des lignes 9 d'ancrage. Bien que dans l'exemple comparatif illustré les points d'ancrage 7 soient illustrés comme des coupes d'ancres à succion, d'autres formes alternatives pourraient être considérées pour l'invention, telles que, notamment, des ancres conventionnelles, ancres gravitaires, pieux battus, ancres à vis ou autres. Alternativement ou complémentairement, les lignes 9 d'ancrage peuvent être fixées aussi à des structures fixes préexistantes, telles que d'autres plateformes, des quais, des rochers, des pieux, etc. En outre, même si, dans chacun des modes de réalisation illustrés, la plateforme 1 présente une pluralité de lignes d'ancrage 9 reliées à une pluralité de points d'ancrage 7, afin de mieux assurer le maintien en position de la plateforme 1, la présente invention est aussi applicable à une plateforme flottante avec une seul ligne d'ancrage reliée à un seul point d'ancrage.

Dans ce premier exemple comparatif, la turbine éolienne 2 est soutenue par le bras flottant 5, lequel forme, avec l'articulation 6, un dispositif de déplacement de la turbine éolienne 2. L'articulation 6 présentant un axe de rotation vertical Z, le flotteur 5 pourra en effet tourner autour de la tourelle 4, actionné par la force du vent comme une girouette, déplaçant la turbine éolienne 2 sur une trajectoire circulaire C autour du corps en fonction d'un ensemble de paramètres dont la direction du vent. Grâce à ce déplacement de la turbine éolienne 2, il est possible de la positionner pour minimiser des effets de sillage de cette turbine éolienne 2 sur des installations adjacentes, et/ou des effets de sillage des installations adjacentes sur cette turbine éolienne 2. L'articulation 6 peut aussi présenter un axe de rotation horizontal X, permettant un léger mouvement angulaire du flotteur 5 dans un plan vertical pour compenser l'effet de la houle.

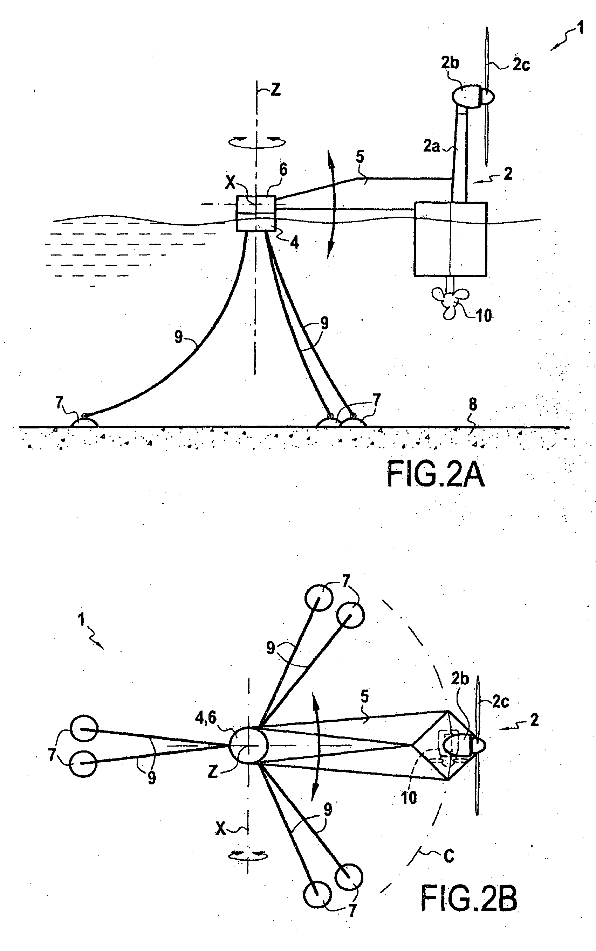

Bien que l'installation suivant le premier exemple comparatif offre déjà un dispositif de déplacement passif, actionné par la même force du vent, les installations suivant l'invention comportent des moyens permettant d'activement commander les déplacements de la turbine éolienne. Dans un premier mode de réalisation, illustré sur les figures 2A et 2B, la plateforme flottante 1 comprend aussi une tourelle d'amarrage 4, et un flotteur 5 connecté à ladite tourelle d'amarrage 4 à travers une articulation 6 et soutenant la turbine éolienne 2. Comme dans l'exemple comparatif, la tourelle 4 est ancrée à une pluralité de points 7 d'ancrage au fond marin 8 par des lignes 9 d'ancrage. Toutefois, dans ce premier mode de réalisation, le flotteur 5 ne tourne autour de l'axe Z impulsé uniquement par la force du vent, mais comporte aussi un propulseur hydrodynamique 10, orienté perpendiculairement au bras et connecté à un dispositif de commande. De cette manière, l'orientation du bras 5, et donc aussi la position de la turbine 2 dans le cercle C, peuvent être commandées en fonction d'un ensemble de paramètres, dont la direction du vent.

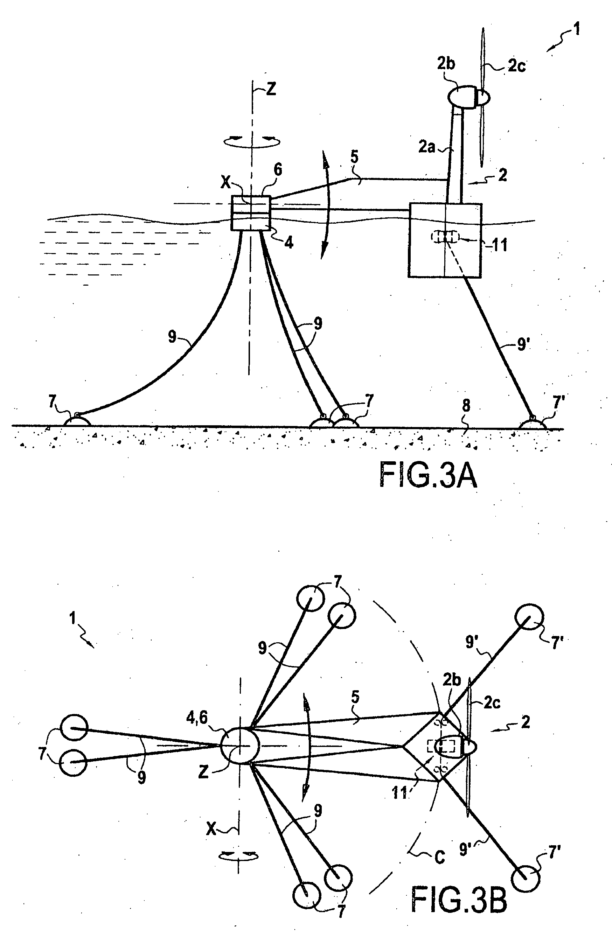

Dans un deuxième mode de réalisation, illustré sur les figures 3A et 3B, la plateforme flottante 1 comprend aussi une tourelle d'amarrage 4, et un flotteur 5 connecté à cette tourelle d'amarrage 4 à travers une articulation 6 et soutenant la turbine éolienne 2. Comme dans le premier et deuxième mode de réalisation, la tourelle 4 est ancrée à une pluralité de points 7 d'ancrage au fond marin 8 par des lignes 9 d'ancrage. Toutefois, dans ce deuxième mode de réalisation, le flotteur 5 est aussi ancré à des points 7' d'ancrage au fond marin par une ligne d'ancrage 9'. Sur la plateforme flottante 3, un actionneur comportant une poulie motrice 11 en engagement avec la ligne 9' peut y exercer des tractions pour déplacer la turbine 2 sur au moins une partie de la trajectoire circulaire C. Alternativement ou complémentairement à la poulie motrice 11, l'actionneur peut comprendre un actionneur linéaire, p.ex. un vérin à chaîne, engageant la ligne d'ancrage 9' directement ou à travers un dispositif intermédiaire, tel que par exemple un ensemble de treuil et poulie. Bien que dans le mode de réalisation illustré l'actionneur soit embarqué à bord de la plateforme flottante, dans un autre mode de réalisation la traction sur la ligne 9' pourrait être effectuée par un actionneur externe, par exemple par un actionneur embarqué à bord d'un navire d'entretien accostant la plateforme flottante 1 avec des moyens permettant de se connecter à la ligne 9' et y exercer une traction pour le déplacement de la turbine 2. Cette alternative serait particulièrement utile pour des déplacements saisonniers de la turbine 2.

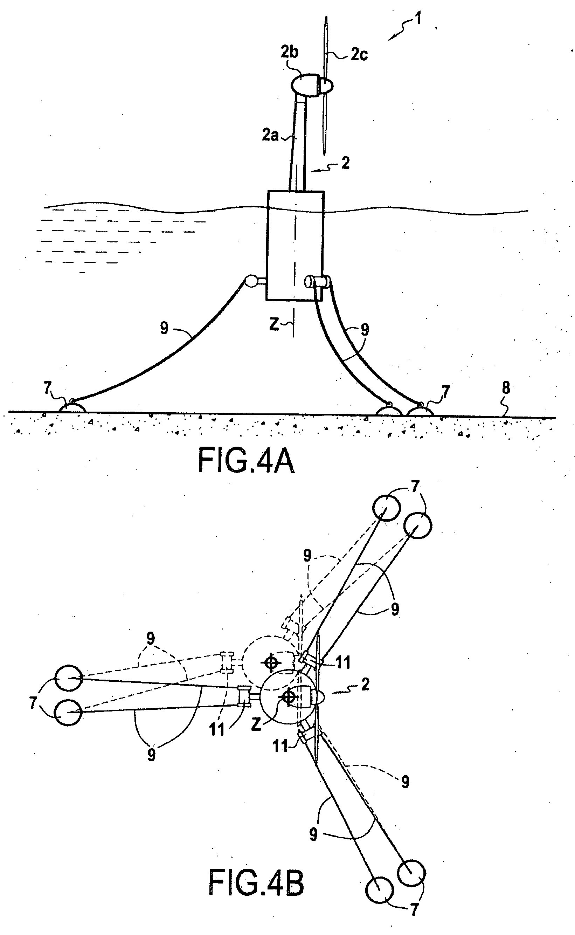

Dans un troisième mode de réalisation, illustré sur les figures 4A et 4B, la plateforme flottante 1 soutient la turbine éolienne 2 et est ancrée à une pluralité de points d'ancrage 7 au fond marin 8 par des lignes d'ancrage 9. Sur la plateforme flottante 1, des actionneurs comportant des poulies motrices 11 en engagement avec les lignes 9 peuvent y exercer des tractions pour déplacer la turbine 2 au moins dans un plan horizontal.

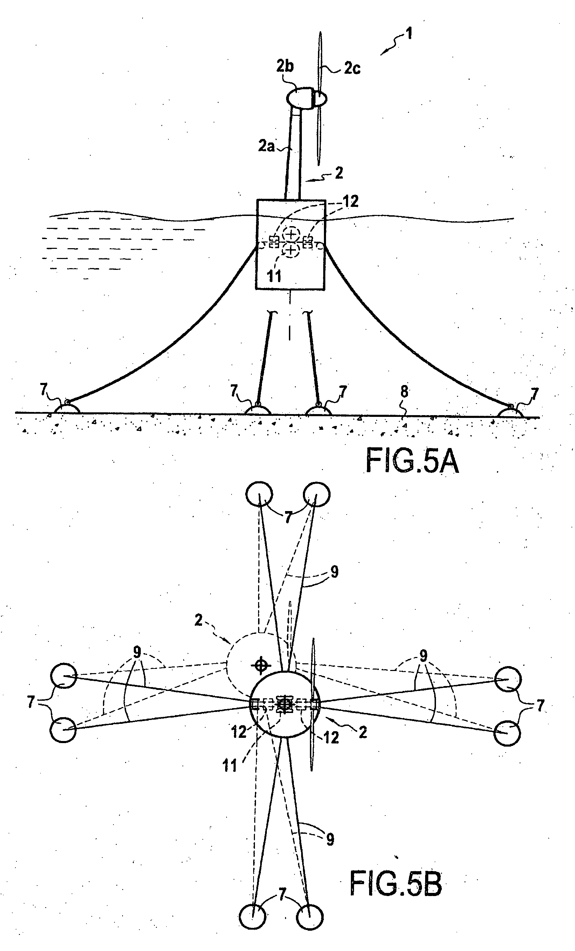

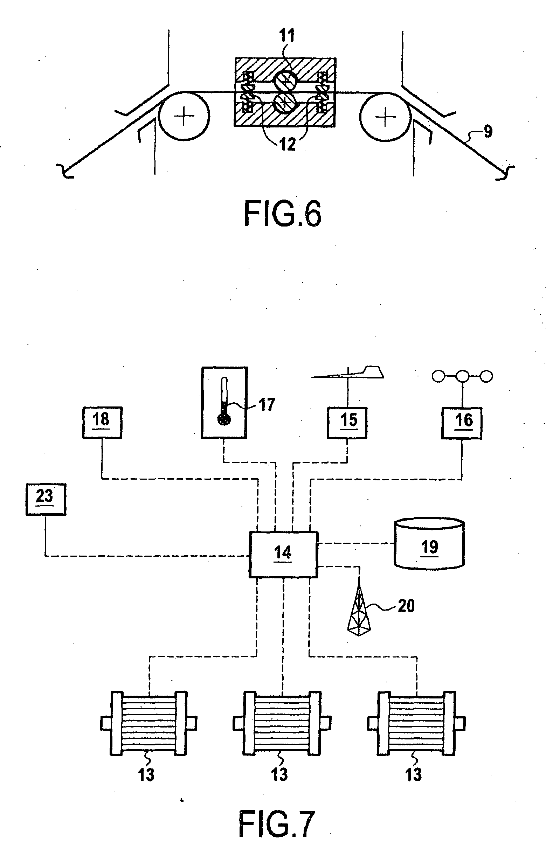

Dans un quatrième mode de réalisation, illustré sur les figures 5A et 5B, la plateforme flottante 1 soutient la turbine éolienne 2 et est ancrée à une pluralité de points d'ancrage 7 au fond marin 8 par des lignes d'ancrage 9. Toutefois, dans ce mode de réalisation, des lignes 9 sont attachées par leurs deux extrémités à des points d'ancrage 7 différents. Sur la plateforme flottante 3, des actionneurs comportent des poulies motrices 11 en engagement avec les lignes 9 pour y exercer des tractions afin de déplacer la turbine 2 au moins dans un plan horizontal. Des freins 12 sont aussi présents sur la plateforme flottante 3 pour arrêter les lignes 9 et fixer la position de la plateforme une fois le déplacement commandé complété. Ce dispositif est illustré plus clairement sur la figure 6.

Dans ces deux cas aussi, l'actionneur pourrait comprendre, alternativement ou en complément à la poulie motrice 11, un actionneur linéaire, p.ex. un vérin à chaîne, engageant la ligne d'ancrage 9 directement ou à travers un dispositif intermédiaire, tel que par exemple un ensemble de treuil et poulie. L'actionneur pourrait aussi être embarqué à bord d'un navire d'entretien pour des visites saisonnières, plutôt qu'à bord de la plateforme flottante elle-même.

Chaque mode de réalisation illustré comporte un dispositif de déplacement actif pouvant être commandé en fonction d'un ensemble de paramètres, dont la direction et la vitesse du vent. Pour cela, tel qu'illustré sur la figure 7, on peut connecter les actionneurs 13 des propulseurs marins ou poulies motrices à une unité de commande 14, laquelle est à son tour connectée à un capteur 15 de direction du vent, un capteur 16 de vitesse du vent, un capteur 17 de température, un capteur 18 de houle, et un capteur de courant 23. L'unité de commande 14 peut aussi être connectée à un dispositif 19 de stockage de données contenant une table de positions optimales ou sub-optimales pour des conditions météorologiques prédéfinies, en particulier en fonction de la direction du vent, et à un dispositif 20 de réception de données externes, par exemple de conditions météorologiques sur une zone plus étendue que celle couverte par les capteurs 15 à 18.

Pour minimiser les effets de sillage, il serait aussi possible de commander le déplacement des turbines éoliennes 2 dans une direction verticale. Pour cela, les plateformes flottantes 1 pourraient comporter un dispositif de ballastage variable, ou des mâts télescopiques pour le soutien des turbines 2.

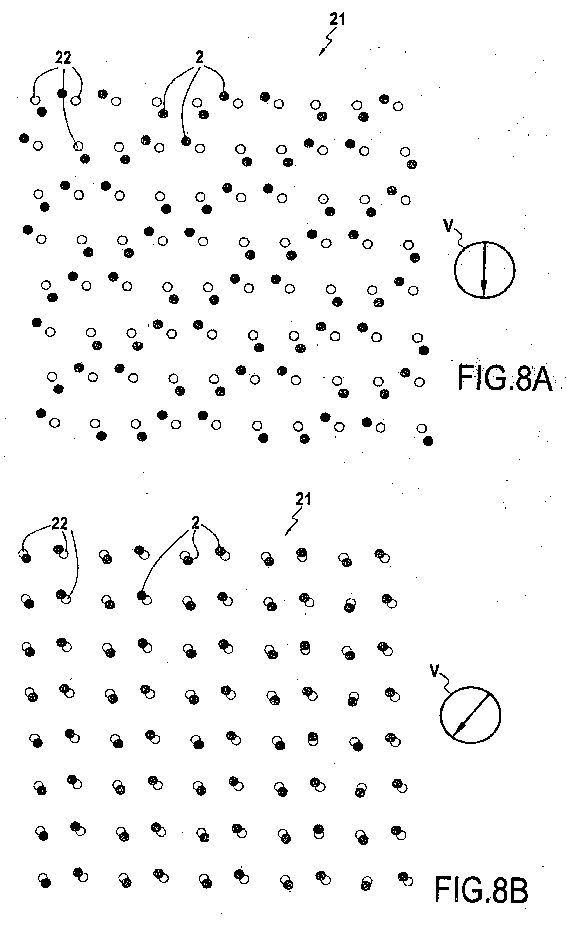

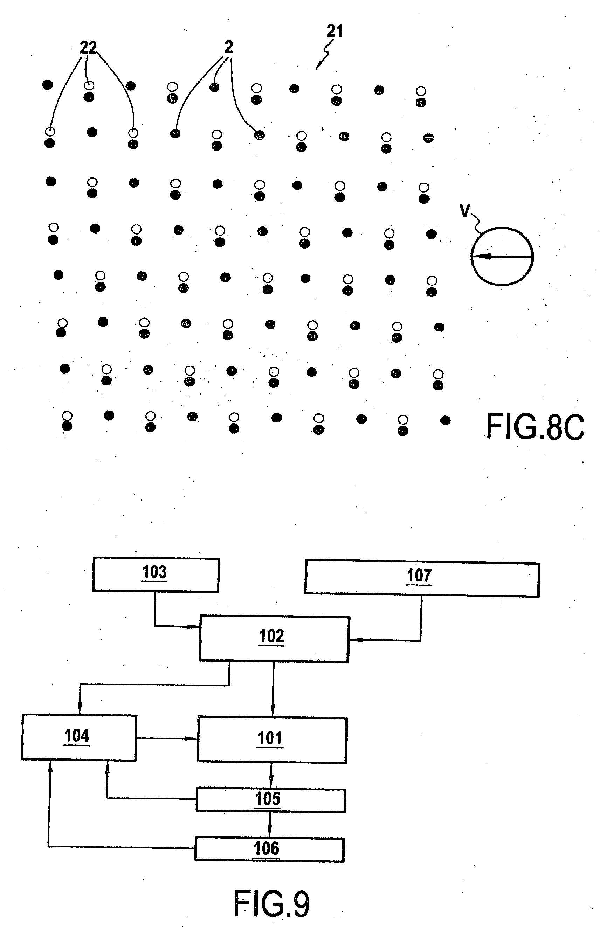

L'objet de déplacer les turbines 2, en particulier dans un plan horizontal, est principalement celui d'éviter des effets de sillage dans des parcs éoliens comportant une pluralité de telles turbines. Les figures 8A à 8C illustrent le positionnement des turbines éoliennes 2 dans un tel parc éolien 21 par différentes directions du vent V. A partir d'une position de base 22, le déplacement de chaque turbine 2 peut être commandé en fonction de facteurs tels que la direction et la vitesse du vent, la température, la houle, d'autres paramètres météorologiques locaux ou globaux, les caractéristiques et profondeur du fond marin, etc., de manière à minimiser les effets de sillage et maximiser ainsi la production d'énergie de l'ensemble des turbines 2.

Dans une première étape de conception d'un tel parc éolien 21, illustrée sur la figure 9, un algorithme d'optimisation 101 peut être appliqué à un modèle 102 de simulation des pertes de sillage du parc éolien, en tenant compte des contraintes 103 de déplacement des turbines 2 pour chercher des solutions 105, optimales ou sub-optimales par rapport à la production d'énergie optimale du parc éolien 106, au positionnement de chaque turbine 2 mobile avec une variété de paramètres météorologiques 107 différents, notamment la direction du vent. Ces solutions peuvent alors être enregistrées dans la table 104 de positions optimales ou sub-optimales pour ces conditions météorologiques. L'algorithme d'optimisation 101 peut être, par exemple, un algorithme combinatoire, un algorithme heuristique comme l'algorithme dit de recuit simulé, un algorithme génétique, etc. Le modèle des sillages 102 peut être, par exemple, un modèle de N.O. Jensen, un modèle d'Ainslie, ou un modèle de viscosité-turbulence.

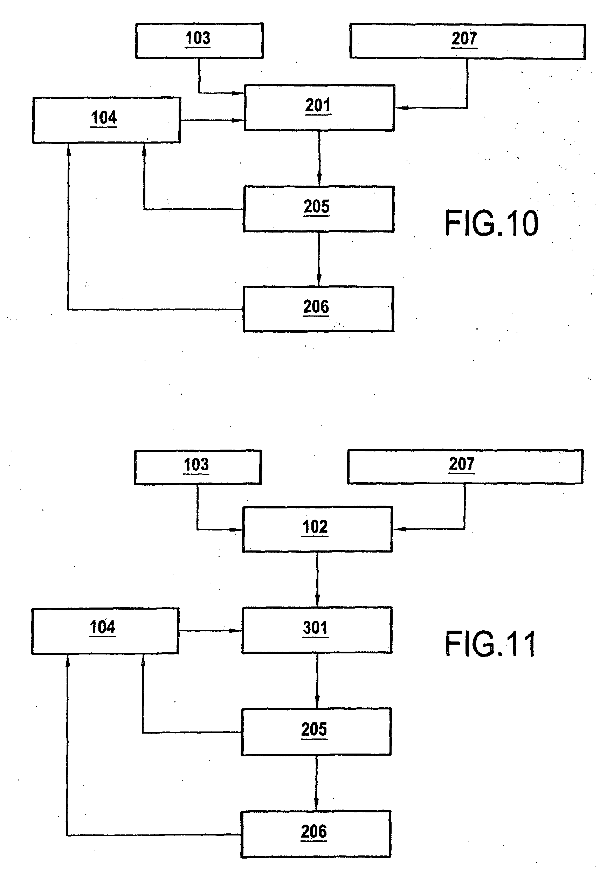

Lors de l'opération de ce parc éolien 21, un algorithme 201 du type dit du plus proche voisin peut être utilisé, sur base de la table 104 de positions optimales ou sub-optimales, des contraintes 103 de déplacement des turbines, et des conditions météorologiques réelles 207 pour générer en temps réel des consignes 205 de positionnement des turbines 2, et une estimation de la production d'énergie du parc éolien 206, comme illustré sur la figure 10.

Alternativement, si des capacités de traitement de données suffisantes sont disponibles, les consignes 205 de positionnement des turbines 2 peuvent être générées en temps réel par un autre algorithme d'optimisation 301, sur base du modèle 102, des contraintes de déplacement 103, des conditions météorologiques réelles 207 et de la table 104, comme illustré sur la figure 11.

Dans les deux cas, les nouvelles consignes 205 de positionnement peuvent être présentées à un opérateur humain pour confirmation avant d'être transmises aux actionneurs 13. Si l'opérateur humain modifie ces consignes 205, un test de validité des consignes modifiées par rapport à des contraintes de mobilité des turbines 2 peut être effectué avant de transmettre ces nouvelles consignes aux actionneurs 13.

Si le parc éolien 21 est situé dans un endroit aux vents saisonniers très dominants, il est possible de se passer d'une commande en temps réel et de ne déplacer les turbines, collectivement ou une par une, qu'avec une périodicité assez grande. Dans ce cas, plutôt que de relier chaque plateforme flottante 1 du parc éolien 21 à un centre de commande, des équipes d'opérateurs peuvent se déplacer vers les installations pour déplacer les turbines éoliennes 2, avec des actionneurs embarqués à bord des plateformes flottantes 1 ou de navires d'entretien.

Quoique la présente invention ait été décrite en se référant à des exemples de réalisation spécifiques, il est évident que différentes modifications et changements peuvent être effectués sur ces exemples sans sortir de la portée générale de l'invention telle que définie par les revendications. Par exemple, bien que les turbines éoliennes illustrées soient des turbines à rotor à axe horizontal, l'invention est aussi applicable à des turbines à rotor à axe vertical. De la même manière, les actionneurs proposés pour le déplacement pourraient être non seulement des poulies motorisées ou des propulseurs hydrodynamiques, mais aussi des vérins à chaînes, crémaillères, des plans porteurs hydrodynamiques sous-marins ou une combinaison de ces éléments. Bien que dans tous les modes de réalisation illustrés la plateforme flottante soit ancrée à une pluralité de points d'ancrage par des lignes d'ancrage, ce qui présente l'avantage d'offrir une bonne stabilité avec des moyens comparativement simples, des moyens alternatifs d'ancrage, au fond ou à des structures fixes préexistantes, peuvent aussi être envisagés. En outre, bien que les turbines éoliennes décrites soient particulièrement adaptées à la génération d'électricité, l'invention pourrait être appliquée à l'exploitation de l'énergie éolienne avec d'autres objectifs, tels que, par exemple, le pompage, ou la désalinisation d'eau de mer. Enfin, bien que l'invention ait été décrite par son application au large marin, elle serait aussi applicable sur toute étendue d'eau, comme, par exemple, des lacs naturels ou artificiels, des lagunes, des rivières, ou des estuaires. Par conséquent, la description et les dessins doivent être considérés dans un sens illustratif plutôt que restrictif.

## Revendications

1. Parc éolien comportant une pluralité de plateformes flottantes (3) dont chacune est ancrée à au moins un point d'ancrage (7,7') et comporte :
au moins une turbine éolienne (2) ; et
un dispositif de déplacement de la turbine éolienne (2) ;
**caractérisée en ce que** le dispositif de déplacement est un dispositif de déplacement actif configuré pour déplacer la turbine éolienne (2) en fonction d'un ensemble de paramètres, dont la direction et la vitesse du vent (V), afin de minimiser les effets de sillage aérodynamique.

2. Parc éolien suivant la revendication 1, dans lequel ledit dispositif de déplacement actif est connecté à une unité de commande (14), apte à être reliée à un ensemble de capteurs, dont au moins un capteur (15) de direction du vent, pour commander un déplacement de la turbine éolienne (2) en fonction de signaux émis par ledit ensemble de capteurs.

3. Parc éolien suivant la revendication 2, dans lequel ledit dispositif de déplacement actif comporte au moins un actionneur apte à tirer sur une ligne d'ancrage (9,9') pour déplacer la turbine éolienne (2).

4. Parc éolien suivant la revendication 3, dans lequel la ligne d'ancrage (9,9') couplée audit actionneur comporte deux extrémités, connectées chacune à un point d'ancrage (7,7') différent.

5. Parc éolien suivant l'une quelconque des revendications 1 à 4, dans lequel ledit dispositif de déplacement actif comporte au moins un propulseur hydrodynamique apte à propulser le déplacement de la turbine éolienne (2).

6. Parc éolien suivant l'une quelconque des revendications 1 à 5, dans lequel ladite plateforme flottante (3) comporte une tourelle d'amarrage (4), et un flotteur (5), soutenant ladite turbine éolienne (2) et connecté audit corps d'amarrage (4) à travers une articulation (6) avec au moins un axe de rotation vertical (Z).

7. Parc éolien suivant une quelconque des revendications 1 à 6, dans lequel ledit dispositif de déplacement est apte à déplacer la turbine éolienne (2) dans un plan horizontal.

8. Parc éolien suivant une quelconque des revendications 1 à 7, dans lequel ledit dispositif de déplacement est apte à déplacer la turbine éolienne (2) verticalement et comporte pour cela un dispositif de ballastage variable de la plateforme flottante ou un mât mobile de la turbine éolienne.

9. Procédé d'exploitation d'énergie éolienne par un ensemble de plateformes flottantes (3) ancrées chacune à au moins un point d'ancrage (7,7') et comportant chacune au moins une turbine éolienne (2), dans lequel au moins une turbine éolienne (2) dudit ensemble de plateformes flottantes est déplacée par un dispositif de déplacement actif en fonction d'un ensemble de paramètres, dont la direction et la vitesse du vent (V) afin de minimiser les effets de sillage aérodynamique et maximiser la production d'énergie de l'ensemble de plateformes flottantes.

10. Procédé d'exploitation d'énergie éolienne suivant la revendication 9, dans lequel la turbine éolienne (2) est déplacée par traction d'un actionneur sur au moins une ligne d'ancrage (9,9').

11. Procédé d'exploitation d'énergie éolienne suivant l'une quelconque des revendications 9 ou 10, dans lequel la turbine éolienne (2) est déplacée par un propulseur (10) immergé.

12. Procédé d'exploitation d'énergie éolienne suivant l'une quelconque des revendications 9 à 11, dans lequel la turbine éolienne (2) est déplacée sur un flotteur (5) tournant autour d'une tourelle d'amarrage (4) à laquelle il est connecté par une articulation (6) avec au moins un axe de rotation vertical (Z).

13. Procédé d'exploitation d'énergie éolienne suivant l'une quelconque des revendications 9 à 12, dans lequel la turbine éolienne (2) est déplacée, en fonction d'un ensemble de paramètres incluant la direction et la vitesse du vent (V), vers une position prédéfinie pour maximiser une production d'énergie calculée suivant un modèle de simulation des sillages aérodynamiques de l'ensemble de plateformes flottantes pour cet ensemble de paramètres.

## Patentansprüche

1. Windkraftwerk, umfassend eine Vielzahl von schwimmenden Plattformen (3), die jeweils an mindestens einem Verankerungspunkt (7, 7') verankert sind und umfassen:
mindestens eine Windturbine (2) und
eine Vorrichtung zum Bewegen der Windturbine (2),
**dadurch gekennzeichnet, dass** die Bewegungsvorrichtung eine aktive Bewegungsvorrichtung ist, die dazu konfiguriert ist, die Windturbine (2) in Abhängigkeit von einer Gesamtheit von Parametern, unter anderem der Richtung und der Geschwindigkeit des Windes (V), zu bewegen, um die aerodynamischen Sogwirkungen zu minimieren.

2. Windkraftwerk nach Anspruch 1, bei dem die aktive Bewegungsvorrichtung an eine Steuereinheit (14) angeschlossen ist, die geeignet ist, an eine Gesamtheit von Sensoren angeschlossen zu werden, unter anderem mindestens einen Sensor (15) für die Windrichtung, um eine Bewegung der Windturbine (2) in Abhängigkeit von Signalen, die von der Gesamtheit von Sensoren entsandt werden, zu steuern.

3. Windkraftwerk nach Anspruch 2, bei dem die aktive Bewegungsvorrichtung mindestens einen Aktuator umfasst, der geeignet ist, an einer Verankerungslinie (9, 9') zu ziehen, um die Windturbine (2) zu bewegen.

4. Windkraftwerk nach Anspruch 3, bei dem die Verankerungslinie (9, 9'), die mit dem Aktuator gekoppelt ist, zwei Enden umfasst, die jeweils an einen unterschiedlichen Verankerungspunkt (7, 7') angeschlossen sind.

5. Windkraftwerk nach einem der Ansprüche 1 bis 4, bei dem die aktive Bewegungsvorrichtung mindestens einen hydrodynamischen Antrieb umfasst, der geeignet ist, die Bewegung der Windturbine (2) anzutreiben.

6. Windkraftwerk nach einem der Ansprüche 1 bis 5, bei dem die schwimmende Plattform (3) einen Anlegeturm (4) und einen Schwimmer (5) umfasst, der die Windturbine (2) stützt und an den Anlegepunkt (4) durch ein Gelenk (6) mit mindestens einer vertikalen Drehachse (Z) verbunden ist.

7. Windkraftwerk nach einem der Ansprüche 1 bis 6, bei dem die Bewegungsvorrichtung geeignet ist, die Windturbine (2) in einer Horizontalebene zu bewegen.

8. Windkraftwerk nach einem der Ansprüche 1 bis 7, bei dem die Bewegungsvorrichtung geeignet ist, die Windturbine (2) vertikal zu bewegen, und dazu eine variable Ballastvorrichtung oder einen bewegbaren Windturbinenmast umfasst.

9. Verfahren zur Nutzung von Windenergie durch eine Gesamtheit von schwimmenden Plattformen (3), die jeweils an mindestens einem Verankerungspunkt (7, 7') verankert sind und jeweils mindestens eine Windturbine (2) umfassen, bei dem mindestens eine Windturbine (2) der Gesamtheit von schwimmenden Plattformen von einer aktiven Bewegungsvorrichtung in Abhängigkeit von einer Gesamtheit von Parametern, unter anderem der Richtung und der Geschwindigkeit des Windes (V), bewegt wird, um die aerodynamischen Sogwirkungen zu minimieren und die Energieproduktion der Gesamtheit von schwimmenden Plattformen zu maximieren.

10. Verfahren zur Nutzung von Windenergie nach Anspruch 9, bei dem die Windturbine (2) durch Ziehen eines Aktuators an mindestens einer Verankerungslinie (9, 9') bewegt wird.

11. Verfahren zur Nutzung von Windenergie nach einem der Ansprüche 9 oder 10, bei dem die Windturbine (2) von einem versenkten Antrieb (10) bewegt wird.

12. Verfahren zur Nutzung von Windenergie nach einem der Ansprüche 9 bis 11, bei dem die Windturbine (2) auf einem Schwimmer (5) bewegt wird, der sich um einen Anlegeturm (4) dreht, an den er durch ein Gelenk (6) mit mindestens einer vertikalen Drehachse (Z) angeschlossen ist.

13. Verfahren zur Nutzung von Windenergie nach einem der Ansprüche 9 bis 12, bei dem die Windturbine (2) in Abhängigkeit von einer Gesamtheit von Parametern, einschließlich der Richtung und der Geschwindigkeit des Windes (V), zu einer vordefinierten Position bewegt wird, um eine Energieproduktion zu maximieren, die nach einem Simulationsmodell der aerodynamischen Sogwirkungen der Gesamtheit von schwimmenden Plattformen für diese Gesamtheit von Parametern berechnet wurde.

## Claims

1. A wind farm including a plurality of floating platforms (3), each of which is anchored to at least one anchor point (7, 7') and includes:
at least one wind turbine (2); and
a shift device for shifting the wind turbine (2);
said wind farm being **characterized in that** the shift device is an active shift device configured to shift the wind turbine (2) as a function of a set of parameters, including wind (V) direction and speed, in order to minimize the aerodynamic wake effects.

2. A wind farm according to claim 1, wherein said active shift device is connected to a control unit (14), suitable for being connected to a set of sensors, including at least one wind direction sensor (15), for causing the wind turbine (2) to shift as a function of signals transmitted by said set of sensors.

3. A wind farm according to claim 2, wherein said active shift device includes at least one actuator suitable for pulling on an anchor line (9, 9') in order to shift the wind turbine (2).

4. A wind farm according to claim 3, wherein the anchor line (9, 9') coupled to said actuator has two ends, each of which is connected to a different anchor point (7, 7').

5. A wind farm according to any one of claims 1 to 4, wherein said active shift device includes at least one hydrodynamic thruster suitable for exerting thrust to shift the wind turbine (2).

6. A wind farm according to any one of claims 1 to 5, wherein said floating platform (3) includes a mooring buoy (4) and a floater (5) that supports said wind turbine (2) and that is connected to said mooring buoy (4) via a hinge (6) having at least a vertical axis of rotation (Z).

7. A wind farm according to any one of claims 1 to 6, wherein said shift device is suitable for shifting the wind turbine (2) in a horizontal plane.

8. A wind farm according to any one of claims 1 to 7, wherein said shift device is suitable for shifting the wind turbine (2) vertically, and comprises for this a variable ballast device for the floating platform or a movable mast for the wind turbine.

9. A method of exploiting wind energy by means of a set of floating platforms (3), each of which is anchored to at least one anchor point (7,7') and each of which includes at least one wind turbine (2), wherein at least one wind turbine (2) of said set of floating platforms is shifted by an active shift device as a function of a set of parameters, including wind (V) direction and speed in order to minimize the aerodynamic wake effects and in order to maximize the power generation of the set of floating platforms.

10. A method of exploiting wind energy according to claim 9, wherein the wind turbine (2) is shifted by traction exerted by an actuator on at least one anchor line (9, 9').

11. A method of exploiting wind energy according to claim 9 or claim 10, wherein the wind turbine (2) is shifted by an immersed thruster (10).

12. A method of exploiting wind energy according to any one of claims 9 to 11, wherein the wind turbine (2) is shifted on a floater (5) that is mounted to turn about a mooring buoy (4) to which it is connected via a hinge (6) having at least a vertical axis of rotation (Z).

13. A method of exploiting wind energy according to any one of claims 9 to 12, wherein the wind turbine (2) is shifted, as a function of a set of parameters including wind direction (V), into a predefined position for maximizing power generation, which position is computed using a model for simulating the aerodynamic wakes of the set of floating platforms for said set of parameters.
